# EUROPEAN PATENT APPLICATION

(11) **EP 4 779 967 A1**
(43) Date of publication of application: **22.07.2026**
(21) Application number: 24886068.6
(22) Date of filing: 15.10.2024
(51) Int. Cl.: H04N 9/31

(54) **PROJECTOR AND CONTROL METHOD THEREFOR**

(30) Priority: 30.10.2023 KR 20230146987
(71) Applicant: Samsung Electronics Co., Ltd., Suwon-si, Gyeonggi-do 16677 (KR)
(72) Inventor: KIM, Hyungchul, Suwon-si Gyeonggi-do 16677 (KR)
(74) Representative: Appleyard Lees IP LLP
(86) International application number: PCT/KR2024/015585
(87) International publication number: WO 2025/095393

(57) **Abstract**

A projector is disclosed. The projector comprises: a memory; a projection unit; a distance sensor for sensing a distance to a projection surface; an image sensor for imaging the projection surface; and a processor. The processor identifies the state of the projection surface on the basis of the results of sensing by the distance sensor and the image sensor, sets a correction weight for each region according to the identified state and stores the correction weight in the memory, applies the correction weight for each region to an image to be projected onto the projection surface to correct the image, and controls the projection unit to project the corrected image onto the projection surface.

## Description

### [Technical Field]

The present disclosure relates to a projector and a control method therefor, and more particularly, to a projector that corrects an image in consideration of a non-uniform projection surface and projects the corrected image onto the projection surface, and a control method therefor.

### [Background Art]

With the development of electronic technology, various types of electronic devices have been developed and distributed. In particular, a projector capable of projecting an image onto a screen or a wall is used in various places such as homes, offices, and public places, and has continuously developed over recent years.

The projector may project light generated from a light source onto a screen or a wall through a projection lens. The projector may perform a correction operation such as keystone correction to project an optimal image to a user.

The projector may project light onto a projection surface to represent an image, and accordingly, when the projection surface is non-uniform, the image itself may appear distorted. In a conventional projector, an attempt has been made to correct the image itself and project the corrected image. However, when only a part of an entire region of the projection surface is non-uniform, unintended screen distortion may occur even when the corrected image is projected.

### [Disclosure]

### [Technical Solution]

According to at least one embodiment of the present disclosure, provided is a projector including: a memory; a projection unit; a distance sensor configured to sense a distance to a projection surface; an image sensor configured to capture an image of the projection surface; and a processor, wherein the processor is configured to identify a projection surface state based on sensing results obtained from the distance sensor and the image sensor, set a correction weight for each region based on the identified state and store the correction weight in the memory, correct an image to be projected onto the projection surface by applying the correction weight for each region to the image, and control the projection unit to project the corrected image onto the projection surface.

According to at least one embodiment of the present disclosure, provided is a control method for a projector, the method including: projecting a reference pattern image onto a projection surface; sensing, by using a distance sensor, a distance to each region of the projection surface on which the reference pattern image is projected; capturing, by using an image sensor, an image of the projection surface on which the reference pattern image is projected; identifying a projection surface state based on a sensing value obtained from the distance sensor and image-capture data obtained from the image sensor; setting and storing a correction weight for each region of the projection surface based on the identified state; correcting an image to be projected onto the projection surface by applying the correction weight for each region to the image; and projecting the corrected image onto the projection surface.

According to at least one embodiment of the present disclosure, provided is a computer-readable recording medium including a program for executing a control method for a projector, wherein the method includes: projecting a reference pattern image onto a projection surface; sensing, by using a distance sensor, a distance to each region of the projection surface on which the reference pattern image is projected; capturing, by using an image sensor, an image of the projection surface on which the reference pattern image is projected; identifying a projection surface state based on a sensing value obtained from the distance sensor and image-capture data obtained from the image sensor; setting and storing a correction weight for each region of the projection surface based on the identified state; correcting an image to be projected onto the projection surface by applying the correction weight for each region to the image; and projecting the corrected image onto the projection surface.

### [Description of Drawings]

FIG. 1 is a block diagram illustrating a configuration of a projector according to various embodiments of the present disclosure.
FIG. 2 is a block diagram illustrating an example of a detailed configuration of the projector according to the various embodiments.
FIGS. 3 and 4 are diagrams illustrating identification of a non-uniform region based on a reference pattern image according to various embodiments.
FIGS. 5 to 8 are diagrams illustrating setting of a correction weight for the non-uniform region according to various embodiments.
FIGS. 9 to 11 are diagrams illustrating a method of locally correcting a peripheral region of the non-uniform region.
FIGS. 12 to 20 are flowcharts illustrating a control method for a projector according to various embodiments.

### [Mode for Invention]

Terms used in the specification will be briefly described, and the present disclosure will then be described in detail.

General terms currently widely used are selected as terms used in the embodiments of the present disclosure in consideration of their functions in the present disclosure, and may be changed based on the intentions of those skilled in the art or a judicial precedent, the emergence of a new technique, or the like. In addition, in a specific case, terms arbitrarily selected by an applicant may be present. Here, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In the specification, the expression such as "have," "may have," "include," or "may include," indicates the presence of a corresponding feature (for example, a numerical value, a function, an operation, or a component such as a part), and does not exclude the presence of an additional feature.

In the present disclosure, the expression such as "A or B," "least one of A and/or B," or "one or more of A and/or B" may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

The expressions such as "first" and "second," used in the present disclosure, may indicate various components regardless of the sequence and/or importance of the components. These expressions are only used to distinguish one component and another component from each other, and do not limit the corresponding components.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

A term of a singular number may include its plural number unless explicitly indicated otherwise in the context. It should be understood that a term "include" or "formed of" used in this application specifies the presence of features, numerals, steps, operations, components, parts, or combinations thereof, which are mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module and be implemented by at least one processor (not shown) except for a "module" or a "~er/or" that needs to be implemented by a specific hardware.

Hereinafter, an embodiment of the present disclosure is described in more detail with reference to the accompanying drawings.

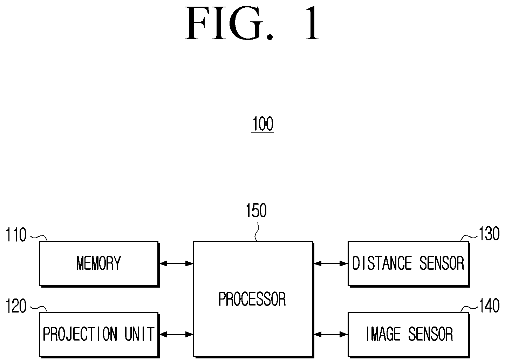

FIG. 1 is a block diagram illustrating a configuration of a projector according to various embodiments of the present disclosure.

A projector 100 refers to an electronic apparatus that represents an image by projecting light onto various projection surfaces such as a wall, a screen, a floor, or a ceiling. The projector 100 may be implemented in various forms such as a mobile projector including wheels and being movable, a fixed projector fixed to a ceiling or a wall, a basic projector placed on a floor, or an aerial projector usable while floating in air like a drone.

Referring to FIG. 1, the projector 100 may include a memory 110, a projection unit 120, a distance sensor 130, an image sensor 140, and a processor 150.

The memory 110 may store at least one instruction, data, program, or the like required for an operation of the projector 100. For example, the memory 110 may store data related to a reference pattern image. The reference pattern image may include an image used to inspect uniformity of a projection surface. The reference pattern image may be included in various forms. For example, the reference pattern image may be implemented in various forms such as a lattice pattern including a plurality of lattices, or a matrix pattern in which a plurality of dots, lines, symbols, characters, or the like are arranged like a matrix. The memory 110 may store various data related to the size, shape, color, display position, or the like of the reference pattern image. The memory 110 may be implemented in a form of a memory embedded in the projector 100 or in a form of a memory detachably attached to the projector 100 based on a data storage purpose. For example, data for driving the projector 100 may be stored in the embedded memory of the projector 100, and data for extension functions of the projector 100 may be stored in the memory detachably attached to the projector 100.

The embedded memory of the projector 100 may be implemented as at least one of a volatile memory (e.g., a dynamic random access memory (DRAM), a static random access memory (SRAM), or a synchronous dynamic random access memory (SDRAM)) or a non-volatile memory (e.g., a one time programmable read-only memory (OTPROM), a programmable read-only memory (PROM), an erasable and programmable read-only memory (EPROM), an electrically erasable and programmable read-only memory (EEPROM), a mask ROM, a flash ROM, a flash memory (e.g., a NAND flash or a NOR flash), a hard drive, or a solid state drive (SSD)).

The memory 110 may be implemented as a single memory storing data generated in various operations according to the present disclosure, is not limited thereto, and may be implemented to include a plurality of memories each storing different types of data or data generated in different stages.

The projection unit 120 is a component for representing an image by projecting light outward.

The projection unit 120 may be implemented using various projection methods (e.g., a cathode-ray tube (CRT) method, a liquid crystal display (LCD) method, a digital light processing (DLP) method, or a laser method).

When implemented using the CRT method, the projection unit 120 may include a CRT and a lens. When an image is displayed on the CRT of the projection unit 120, light emitted from the CRT may be enlarged through the lens and projected outward. Based on the number of CRTs, the CRT method may be divided into a single-tube type and a three-tube type, and in the three-tube type, red, green, and blue CRTs may be separately implemented.

When implemented using the LCD method, the projection unit 120 may include a light source, a liquid crystal display (LCD), other lenses, or the like. The LCD method refers to a method of displaying an image by transmitting light emitted from the light source through the LCD. The LCD method may be divided into a single-panel type and a three-panel type. In the three-panel type, light emitted from the light source may be separated into red, green, and blue colors by a dichroic mirror (a mirror reflecting only light of a specific color and transmitting remaining light), transmitted through the LCD, and then gathered into one place again.

The DLP method refers to a method of displaying an image by using a digital micromirror device (DMD) chip. The projection unit 120 using the DLP method may include a light source, a color wheel, a DMD chip, a projection lens, or the like. Light output from the light source may be colored while passing through a rotating color wheel. Light passing through the color wheel may be input into the DMD chip. The DMD chip may include numerous micro mirrors. The DMD chip may reflect input light. The projection lens may perform a function of enlarging light reflected from the DMD chip to an image size.

In another example, the projection unit 120 using the laser method may include a diode pumped solid state (DPSS) laser and a galvanometer. To output various colors, the DPSS laser may be provided for each of RGB colors. The galvanometer may rotate a mirror at a high speed by using a motor to reflect laser light. For example, the galvanometer may rotate the mirror at a maximum of 40 KHz/sec.

The projection unit 120 may include various types of light sources. For example, the projection unit 120 may include at least one light source of a lamp, a light emitting diode (LED), or a laser.

The projection unit 120 may output an image at an aspect ratio of 4:3, an aspect ratio of 5:4, or a wide aspect ratio of 16:9 based on a purpose of the projector 100 or a user setting, and may output the image having any of various resolutions such as wide video graphics array (WVGA, 854x480 pixels), super video graphics array (SVGA, 800x600 pixels), extended graphics array (XGA, 1024x768 pixels), wide extended graphics array (WXGA, 1280x720 pixels or 1280x800 pixels), super extended graphics array (SXGA, 1280x1024 pixels), ultra extended graphics array (UXGA, 1600x1200 pixels) and full high-definition (full HD, 1920x1080 pixels), based on the aspect ratio.

The projection unit 120 may perform various functions to adjust an output image under control of the processor 150. For example, the projection unit 120 may perform a zoom function, a keystone function, a quick corner (four-corner) function, a lens shift function, or the like.

Specifically, the projection unit 120 may perform the zoom function of enlarging or reducing an image based on a distance (projection distance) to a screen.

A method of performing the zoom function may be divided into a hardware method of adjusting a screen size by moving a lens, and a software method of adjusting a screen size by cropping an image. When the zoom function is performed, focus adjustment of an image is required. The focus adjustment may be performed by a manual focus method, an electric method, or the like. The manual focus method refers to a method of manually adjusting the focus. The electric method refers to a method of automatically adjusting the focus by using a motor. The projector 100 may selectively provide a digital zoom function or an optical zoom function.

The projection unit 120 may perform the keystone correction function. When a projection height does not match during front projection, a screen may be distorted upward or downward. The keystone correction function refers to a function of correcting a distorted screen. For example, when distortion occurs in a left-right direction of the screen, the distortion may be corrected by using horizontal keystone, and when distortion occurs in an updown direction of the screen, the distortion may be corrected by using vertical keystone. The quick corner (four-corner) correction function refers to a function of correcting a screen when a central region of the screen is normal and a corner region thereof is unbalanced. The lens shift function refers to a function of moving a screen position without distorting the screen when the screen is out of a projection range.

The projection unit 120 may automatically provide the zoom, keystone, and focus functions by analyzing a surrounding environment and a projection environment even without user manipulation. Specifically, the projection unit 120 may automatically provide the zoom, keystone, and focus functions based on information such as a distance between the projector 100 and a screen, information on a space in which the projector 100 is currently positioned, information on an amount of ambient light, or the like, which are sensed by sensors (e.g., a depth camera, a distance sensor, an infrared sensor, or an illuminance sensor) .

In addition, the projection unit 120 may provide an illumination function by using a light source. In particular, the projection unit 120 may output light by using a light source such as one or more LEDs.

In an embodiment, the projection unit 120 may output a light source by using a surface-emitting LED. The surface-emitting LED refers to an LED having an optical sheet disposed above the LED to uniformly distribute and output light.

The projection unit 120 may provide a user with a dimming function for adjusting an intensity of light emitted from a light source. Specifically, when the user inputs a command for adjusting intensity of light emitted from a light source through various manipulation interfaces such as a touch screen, a button, or a dial, the projection unit 120 may control an LED to output light at an intensity corresponding to the user command. Alternatively, the projection unit 120 may provide the dimming function based on content analyzed by the processor 150 without a user input. Specifically, the projection unit 120 may control an LED to output intensity of light emitted from a light source based on information about currently provided content (e.g., a content type or content brightness).

The projection unit 120 may control a color temperature under control of the processor 150.

The distance sensor 130 is a component for sensing a distance to an external object. The processor 150 may identify a distance to a projection surface or another external object based on a sensing value obtained from the distance sensor 130. The distance sensor 130 may include at least one of an ultrasonic sensor, an infrared sensor, a laser sensor, an optical distance sensor, a radar (RADAR) sensor, a light detection and ranging (LIDAR) sensor, a photodiode sensor, or a time of flight (ToF) sensor.

For example, when the distance sensor 130 is implemented as the ultrasonic sensor, the distance sensor 130 may include a transmitter and a receiver. When a sound wave is output from the transmitter, the receiver may receive an echo of the output sound wave reflected from an object. The processor 150 may calculate a distance to the object based on a time difference between the output time and reception time of the sound wave based on a speed of sound (340 m/s) .

When the distance sensor 130 is implemented as the infrared sensor, the distance sensor 130 may include a light emitter and a light receiver. When infrared light is output from the light emitter, output infrared light may collide with an object and be reflected. The light receiver may detect a reflected incoming signal. The infrared sensor may use light rather than a sound wave, and accordingly, a distance to an object may be measured by calculating an angle relative to a focus formed on the object based on optical triangulation.

In addition, the TOF sensor refers to a sensor for measuring a distance to an object by using signals such as near-infrared light, ultrasonic waves, or lasers. The TOF sensor may include a transmitter for outputting various signals and a receiver for receiving a reflected signal corresponding thereto. The TOF sensor may measure a distance between the projector 100, i.e., an apparatus including the sensor, and an object based on a time (time of flight) during which a signal emitted from the transmitter is reflected from the object and returns.

The image sensor 140 is a component for capturing an image. The image sensor 140 may capture images of various external objects including a projection surface under control of the processor 150. For example, the image sensor 140 included in a camera may convert an image captured through a camera lens into a digital signal and generate image data based on the converted signal. The image sensor 140 may be classified as a complementary metal oxide semiconductor (CMOS) image sensor or a charge coupled device (CCD) image sensor based on a structure.

The processor 150 is a component connected to each component of the projector 100 to control an overall operation of the projector 100. The processor 150 may be implemented as a digital signal processor (DSP), a microprocessor, a graphics processing unit (GPU), an artificial intelligence (AI) processor, a neural processing unit (NPU), or a time controller (TCON) for processing a digital image signal. However, the processor 150 is not limited thereto, and may include or be defined as one or more of a central processing unit (CPU), a micro controller unit (MCU), a micro processing unit (MPU), a controller, an application processor (AP), a communication processor (CP), or an advanced reduced instruction set computer (RISC) machines (ARM) processor. In addition, the processor 150 may be implemented as system-on-chip (SoC) or a large scale integration (LSI) in which a processing algorithm is embedded, or may be implemented in a form of an application-specific integrated circuit (ASIC) or a field programmable gate array (FPGA).

In addition, the processor 150 for executing an artificial intelligence model according to an embodiment may be implemented based on a combination of software and a general-purpose processor such as a CPU, an AP, or digital signal processor (DSP), a graphics-dedicated processor such as a GPU or a vision processing unit (VPU), or an artificial intelligence-dedicated processor such as an NPU. The processor 150 may control processing of input data according to predefined operation rules or an artificial intelligence model stored in the memory. Alternatively, when the processor 150 is a dedicated processor (or the artificial intelligence-dedicated processor), the processor 150 may be designed to have a hardware structure specialized for processing a specific artificial intelligence model. For example, hardware specialized for processing a specific artificial intelligence model may be designed as a hardware chip such as an ASIC or an FPGA.

When the processor 150 is implemented as a dedicated processor, the processor 150 may be implemented to include a memory for implementing an embodiment of the present disclosure, or to include a memory processing function for using an external memory. The processor 150 may be implemented as one or more processors.

When an image is projected onto a projection surface by using the projector 100 and a non-uniform region is present within the projection surface, screen distortion may not be resolved using keystone correction. In particular, an ultra-short-throw (UST) projector may project an image from a short distance, and accordingly, such screen distortion may significantly affect the display of an image on a projected screen.

The processor 150 may identify a projection surface state based on sensing results obtained from the distance sensor 130 and the image sensor 140. The processor 150 may activate the distance sensor 130 to identify a distance to the projection surface. In addition, the processor 150 may activate the image sensor 140 to obtain a captured image of the projection surface. In the present disclosure, activation may refer to an operation of turning on a sensor or controlling the sensor to perform a function thereof in a turned-on state.

Specifically, the processor 150 may compare the sensing result obtained from the distance sensor 130 with a sensing result obtained from the image sensor 140, and may identify a non-uniform region included in the projection surface based on a comparison result. In the present disclosure, a non-uniform region refers to a region in a state in which uniformity of a surface state is equal to or less than a predetermined range. For example, a region including at least one protruding region or recessed region and in which flat image display is difficult may be identified as a non-uniform region.

For example, the processor 150 may control the image sensor 140 capable of wide-area sensing to first capture an image of an entire projection surface, identify a non-uniform region included in the projection surface based on an image capture result, and control the distance sensor 130 to sense a distance to the projection surface corresponding to the identified non-uniform region.

The processor 150 may set a correction weight for each region based on the identified projection surface state and store the correction weight in the memory 110. The correction weight for each region refers to a weight set to individually apply a correction level for each region when an entire region of an image to be projected onto the projection surface is divided into a plurality of regions. A method of setting the correction weight for each region of the projection surface is further described below.

The processor 150 may set different correction weights for respective regions corresponding to the image to be projected onto the projection surface and store the correction weights in the memory 110. When projecting an image onto the projection surface, the processor 150 may control the projection unit 120 to apply the correction weight for each region stored in the memory 110 to correct the image and project a corrected image. Accordingly, the same level of correction is not performed for an entire image, and local correction may be performed for an image region displayed in a non-uniform region within the projection surface and a peripheral region thereof.

In FIG. 1, illustration and description are provided based on a case in which the projector 100 includes basic components for sensing a projection surface state and correcting a projected image based on sensing results. However, the projector 100 may further include additional components for identifying a projection surface state in various manners and correcting a projected image.

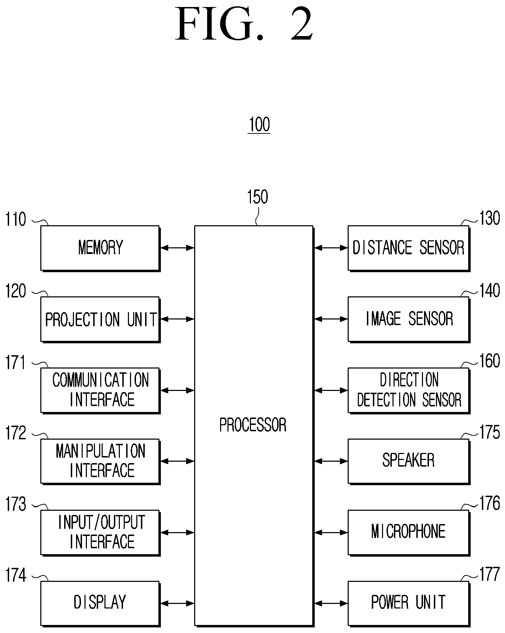

FIG. 2 is a block diagram illustrating an example of a detailed configuration of the projector according to various embodiments.

Referring to FIG. 2, the projector 100 may further include a direction detection sensor 160, a communication interface 171, a manipulation interface 172, an input/output interface 173, a display 174, a speaker 175, a microphone 176, a power unit 177, or the like in addition to the memory 110, the projection unit 120, the distance sensor 130, the image sensor 140, and the processor 150. However, the present disclosure is not limited thereto, and the projector 100 may further include other components, or may omit or modify some of the components. Among the components illustrated in FIG. 2, the memory 110, the projection unit 120, the distance sensor 130, the image sensor 140, and the processor 150 are described with reference to FIG. 1, and redundant descriptions thereof are thus omitted.

The direction detection sensor 160 is a component for sensing a projection direction of the projection unit 120. The direction detection sensor 160 may include at least one of a gyro sensor, a geomagnetic sensor, a tilt sensor, or a compass.

The processor 150 may identify the image projection direction and tilt state of the projector 100 based on a sensing result obtained from the direction detection sensor 160, and may adjust at least one of the image projection angle, focal length, projection distance of the projection unit 120 based on the identified state.

The communication interface 171 is a component for performing communication with at least one external device. The communication interface 171 may include at least one wireless communication module or at least one wired communication module. Each communication module may be implemented in a form of at least one hardware chip. For example, the wireless communication module may include at least one of a wireless fidelity (Wi-Fi) module, a Bluetooth module, an infrared communication module, or another communication module. In addition, the communication interface 171 may include at least one communication chip for performing communication according to various wireless communication standards such as Zigbee, third generation (3G), third generation partnership project (3GPP), long term evolution (LTE), LTE advanced (LTE-A), fourth generation (4G), and fifth generation (5G).

For example, the wired communication module may include at least one of a local area network (LAN) module, an Ethernet module, a pair cable, a coaxial cable, an optical fiber cable, or an ultrawideband (UWB) module. The projector 100 may perform various operations such as demultiplexing, deinterleaving, decoding, scaling, and filtering on content data provided from an external source (e.g., a web server, a broadcasting station, or a multimedia playback apparatus) connected thereto through the communication interface 171 to configure an image, and may project the configured image onto the projection surface through the projection unit 120.

The manipulation interface 172 is a component for receiving a user manipulation. The manipulation interface 172 may include various buttons, a touch screen, or the like included in a main body of the projector 100.

The input/output interface 173 is a component for inputting and outputting various external signals. The input/output interface 173 may receive at least one of an audio signal or an image signal from an external device, and may output a control command to the external device. The input/output interface 173 may be implemented as at least one wired input/output interface among a high-definition multimedia interface (HDMI), a mobile high-definition link (MHL), a universal serial bus (USB), a universal serial bus type-C (USB Type-C), a display port (DP), a thunderbolt interface (Thunderbolt), a video graphics array (VGA) port, a red-green-blue (RGB) port, a d-subminiature (D-SUB), and a digital visual interface (DVI). Although FIG. 2 illustrates the input/output interface 173 and the communication interface 171 as separate components, when communication is performed with an external device through the input/output interface 173, the input/output interface 173 may be regarded as a component included in the communication interface 171.

The display 174 is a component for displaying an operation state of the projector 100, a notification message, a user interface (UI) screen, or the like. The display 174 may be implemented as various types of displays such as a liquid crystal display (LCD) and an organic light emitting diode (OLED) display. Alternatively, the display 174 may be implemented using only one light-emitting element or a plurality of light-emitting elements. The processor 150 may change a display state of the display 174 based on various states including a turned-on state of the projector 100, a normal operation state of the projector 100, or a state in which power is insufficient or an error state occurs, thereby allowing the user to intuitively recognize a state of the projector 100.

The speaker 175 is a component for outputting an audio signal. Although only the speaker 175 is illustrated in FIG. 2, various components such as an audio decoder, an audio output mixer, an audio signal processor, and an amplification circuit for processing the audio signal may be further included in the projector 100. The speaker 175 may include one or more speakers, and when implemented as a plurality of speakers, the speakers may be symmetrically arranged on an exterior of the main body to output the audio signal in all directions, that is, in 360-degree directions.

The microphone 176 is a component for receiving various audio signals. The microphone 176 may receive a user voice or another sound and convert the received sound into audio data. The microphone 176 may be integrally formed on the upper portion, a front portion, a side portion, or the like of the projector 100. The projector 100 may include various components such as an amplifier circuit for amplifying an audio signal received through the microphone 176, an analog to digital (A/D) conversion circuit for sampling the amplified audio signal and converting the sampled audio signal into a digital signal, and a filter circuit for removing a noise component from the converted digital signal.

The power unit 177 may receive power from an external source and supply power to various components of the projector 100. The power unit 177 may receive power through various methods. For example, when a charging station (not shown) for charging is provided in an environment in which the projector 100 operates, the power unit 177 may receive power through the charging station. Alternatively, the power unit 177 may receive power from an external device or a power source by various wired or wireless charging methods. Alternatively, the power unit 177 may include a battery. When external power is connected thereto, the power unit 177 may charge the battery and use power of the battery by using an electrical signal applied from the external power. Alternatively, the power unit 177 may be implemented to include a replaceable battery mounted therein.

Although not illustrated in FIG. 2, when the projector 100 is implemented as a mobile type, the projector 100 may further include at least one motor, a plurality of wheels, and at least one shaft and a gear for transmitting a force from the motor to the plurality of wheels, or the like.

As described above, the projector 100 may include various components based on a type thereof. Accordingly, the projector 100 may project an image onto various types of projection surfaces, and the projection surfaces may include a projection surface such as a wall surface, a ceiling, or a floor surface in which a non-uniform region is partially included. When the processor 150 determines that the projection surface includes a non-uniform region, the processor 150 may identify the region and locally correct an image as described above. Hereinafter, an example of a method of identifying the non-uniform region is first described in detail.

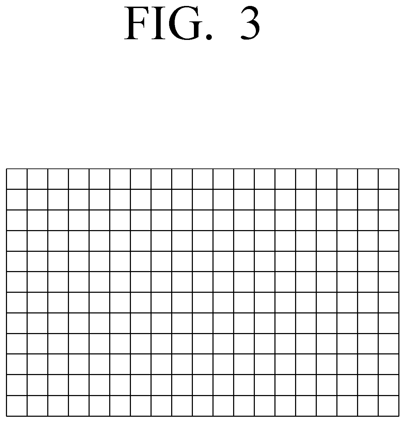

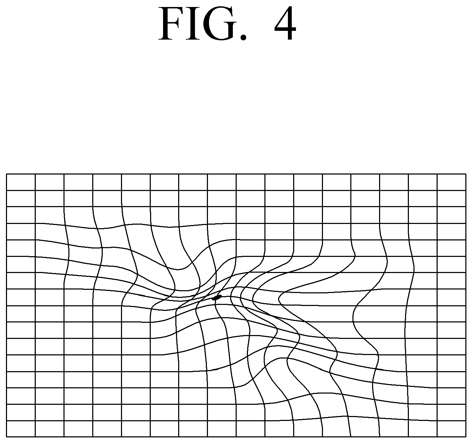

FIGS. 3 and 4 are diagrams illustrating identification of a non-uniform region based on a reference pattern image according to various embodiments. FIG. 3 illustrates a case in which a reference pattern image is projected onto a projection surface in a state in which an entire projection surface is uniform. The reference pattern image in FIG. 3 indicates a lattice pattern in which lines or points are regularly arranged.

The processor 150 may obtain the data related to the reference pattern image stored in the memory 110, and may control the projection unit 120 to project an image corresponding to the data onto the projection surface. In addition, the processor 150 may control the image sensor 140 to capture an image of the projection surface onto which the reference pattern image is projected.

FIG. 3 illustrates a case in which a reference pattern image having a lattice pattern is projected in a state in which no non-uniform region is present on the projection surface. In this case, in the reference pattern image projected onto the projection surface, bending of lattices does not appear, and distances between respective lines maintain a predetermined interval.

FIG. 4 illustrates a case in which a reference pattern image is projected when an outer region of a projection surface is uniform, whereas a non-uniform region is present within the projection surface. As illustrated in FIG. 4, it may be confirmed that in the reference pattern image projected onto the projection surface, patterns in edge regions maintain a predetermined interval between lines, whereas bending of lattices appears in an inner region and an interval between respective lines is also deformed. When the projection surface includes a non-uniform surface, or when an ornament, an insect, or the like is attached to the projection surface, only a partial projection surface may be non-uniform rather than the entire projection surface. In such a case, when the reference pattern image is projected, a partially non-uniform region may be identified as illustrated in FIG. 4.

The processor 150 may identify a non-uniform region within the projection surface based on the captured image obtained from the image sensor 140 and a sensing value obtained from the distance sensor 130. Specifically, the processor 150 may identify a non-uniform region within the projection surface based on the sensing result obtained from the image sensor 140 by capturing the reference pattern image projected onto the projection surface. The processor 150 may compare the reference pattern image stored in the memory 110 with a reference pattern image of the projection surface captured through the image sensor 140, and may identify the non-uniform region within the projection surface based on a comparison result.

Next, the processor 150 may sense a distance between the projector 100 and the projection surface by using the distance sensor 130, and may identify the non-uniform region within the projection surface based on the sensing result. In this case, the processor 150 may generate coordinate information based on the reference pattern image projected onto the projection surface, and may control the distance sensor 130 based on the generated coordinate information to sense a distance to the projection surface for each region of the projection surface or for each coordinate point. For example, when the projector 100 is placed on a floor and the projection surface is vertically erected at a position spaced apart therefrom by a predetermined distance, a distance to an upper edge of the reference pattern image may be measured to be greater than a distance to a lower edge thereof based on an arrangement position of the distance sensor 130 included in the projector 100. That is, based on a height of the projector 100 and a height of the reference pattern image, a distance may increase at a predetermined ratio toward an upper side.

However, when a partial non-uniform region is present, a distance to each point within the non-uniform region may be measured not to be non-uniform. That is, for a recessed portion, a distance may be measured to be greater than that of an adjacent point, and for a protruding portion, a distance may be measured to be smaller than that of the adjacent point. Therefore, when distances between points having the same height in the reference pattern image are measured to be different, the processor 150 may identify a corresponding region as the non-uniform region. In addition, the processor 150 may identify the non-uniform region by comparing a non-uniform state of the projection surface sensed by the distance sensor 130 and a non-uniform state for each region in a captured image obtained from the image sensor 140. For example, the processor 150 may compare a first non-uniform region identified using the distance sensor 130 with a second non-uniform region identified using the image sensor 140, and may determine a common region in which the first non-uniform region and the second non-uniform region overlap as a correction target non-uniform region of the projection surface based on a comparison result.

Alternatively, the processor 150 may aggregate the first non-uniform region and the second non-uniform region based on the comparison result, and may determine the non-uniform region obtained by aggregating two regions as a correction target non-uniform region of the projection surface. In the above-described description, it is described that an image-capture data obtained from the image sensor is first checked and the sensing value obtained from the distance sensor is then checked. However, an order thereof is not necessarily limited, and the order of two operations may be reversed, or two operations may be performed in parallel.

When the non-uniform region is identified, the processor 150 may perform processing for locally correcting an image. Specifically, the processor 150 may set correction weights for respective regions differently and apply the correction weights.

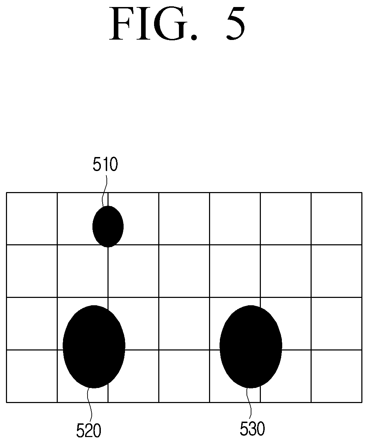

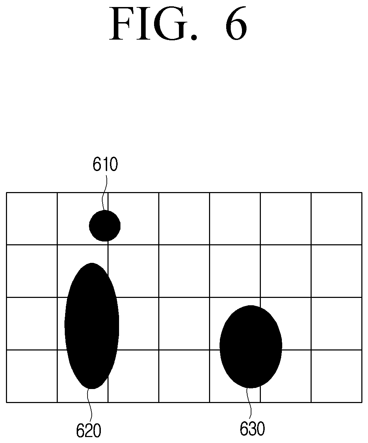

FIGS. 5 to 8 are diagrams illustrating setting of a correction weight for the non-uniform region according to various embodiments. FIG. 5 indicates original image data stored in the memory 110, and FIG. 6 indicates a state in which an image is projected onto the projection surface in the non-uniform state. For convenience of description, circular-shape objects 510, 520, and 530 are illustrated in FIGS. 5 and 6, which is merely an example, and various objects such as a person, a building, or a vehicle may be included in an actual image.

FIG. 5 illustrates a case in which a first object 510 has an oblong elliptical shape in a vertical direction and is close to a circular shape, whereas FIG. 6 illustrates a case in which a first object 610 has upper and lower widths reduced due to non-uniformity of a corresponding region and is thus represented as a substantially circular object.

Conversely, FIG. 5 illustrates a case in which a second object 520 is close to a circular shape, whereas FIG. 6 illustrates a case in which a second object 620 has upper and lower widths increased and is thus represented as an oblong ellipse object in the vertical direction. A third object 530 illustrated in FIG. 5 is represented as an object 630 having the same size in FIG. 6 without any distortion.

When FIGS. 5 and 6 are compared, it may be confirmed that a region in which the third object 530 or 630 is positioned on the projection surface is in a uniform state, and regions in which the first object 510 or 610 and the second object 520 or 620 are positioned are in the non-uniform state. In addition, it may be understood that, in FIG. 5 and FIG. 6, a region in which the first object 510 or 610 is positioned and a region in which the second object 520 or 620 is positioned are in a state in which heights of the projection surface are different from each other.

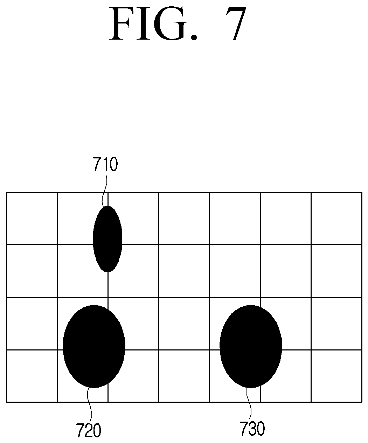

FIG. 7 illustrates a case in which image correction is collectively performed based on a specific non-uniform region on the projection surface. FIG. 7 illustrates a state in which correction is performed by applying the same correction weight to the first object 610 and the second object 620 positioned in the non-uniform region of FIG. 6. Referring to FIG. 7, the second object 620 illustrated in FIG. 6 is corrected to have a corrected value by applying the correction weight thereto and is displayed in a state 720 in which the second object 620 is corrected to have a shape substantially identical to that of the first object 520 in the original image. However, with respect to the first object 610 before being corrected, illustrated in FIG. 6, it may be confirmed that the correction weight is excessively applied to the first object 610, and after correction, the first object 610 is displayed in a state 710 in which the upper and lower widths of the first object 610 are significantly increased. Therefore, when a non-uniform state of the projection surface differs for each region, it is necessary to set different correction weights for respective identified regions.

The processor 150 may set different correction weights for the identified non-uniform region and a peripheral region thereof and store the correction weights in the memory 110, and may correct an image projected onto the projection surface based on the correction weights set differently.

The processor 150 may compare the image-capture data obtained from the image sensor 140 with the data related to the reference pattern image stored in the memory 110, and may measure a degree to which the reference pattern image is deformed in the non-uniform region based on a comparison result. Specifically, the processor 150 may calculate a deformation amount for each coordinate position of the reference pattern image projected onto the projection surface based on the reference pattern image stored in the memory 110. The processor 150 may set the correction weight for each region corresponding to the non-uniform region based on the calculated deformation amount for each coordinate position.

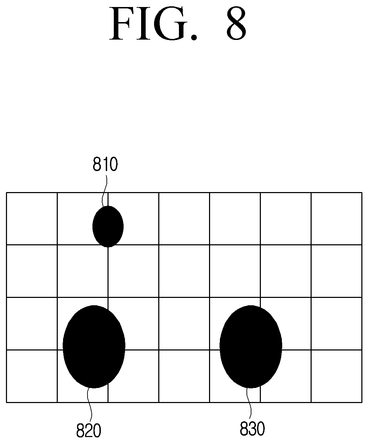

FIG. 8 illustrates a diagram in which correction is performed by setting different correction weights for respective non-uniform regions of the projection surface. For example, FIG. 8 illustrates an image in which correction is performed by applying a correction weight of 80% to the non-uniform region in which the object 620 in FIG. 6 is positioned, and by applying a correction weight of 20% to the non-uniform region in which the object 610 is positioned.

As described above, the processor 150 may set different correction weights based on a deformation amount for each coordinate position within all non-uniform regions.

Alternatively, when consecutive non-uniform regions are present among all non-uniform regions, the processor 150 may identify a region having the most severe non-uniform degree among the non-uniform regions. Specifically, the processor 150 may identify, as the region having the most severe non-uniform degree, a region having the greatest difference in a line interval of the reference pattern image in the image-capture data and a region having the greatest distance difference from surrounding points. The processor 150 may set a correction weight for the region having the most severe non-uniform degree as a reference value (e.g., 100% or 1), and may set the correction weight to be gradually reduced in a direction away therefrom.

Alternatively, the processor 150 may set a correction weight for the non-uniform region positioned at a center among the consecutive non-uniform regions as the reference value (e.g., 100% or 1), and may set the correction weight to be gradually reduced in a direction away therefrom.

Alternatively, when non-uniform regions are separated from each other as in the examples described with reference to FIGS. 5 to 8, the processor 150 may set different correction weights for respective non-uniform regions based on a size difference between an original image and a distorted image. As illustrated in FIGS. 5 to 8, the second object 520 may be more distorted than the first object 510, and accordingly, the processor 150 may set a correction weight of the second object 520 to be greater than a correction weight of the first object 510.

A method of setting the correction weight may vary depending on various embodiments.

For example, the processor 150 may set a correction weight for a non-uniform region included in an image by using machine learning. In this case, the processor 150 may apply a supervised learning method or an unsupervised learning method to set the correction weight.

Alternatively, the processor 150 may measure a difference value for each coordinate point between the original image data stored in the memory 110 and the image-capture data based on the coordinate points of the reference pattern image. The processor 150 may measure similarity between the original image data and the image-capture data through histogram comparison obtained based on the measured difference value, and may repeatedly perform a process of correcting the similarity by using deep learning to determine a final correction weight.

Alternatively, the processor 150 may identify the projection surface state based on the sensing results obtained from the distance sensor 130 and the image sensor 140, and may set the correction weight for each region based on the identified state. The processor 150 may identify the maximum value among correction weights set for respective regions, set a correction weight on the basis of a non-uniform region identified as having the maximum correction weight in an image, and then set a correction weight of a peripheral region to be sequentially reduced. In this case, the processor 150 may capture an image of the projection surface onto which a corrected image is projected by using the image sensor 140, and may measure similarity for the corrected image by comparing the image-capture image with the reference pattern image stored in the memory 110. For example, the processor 150 may compare a non-uniform state of the corrected images for respective regions, and may set the correction weight as a final value when similarity is equal to or greater than 90% based on a comparison result.

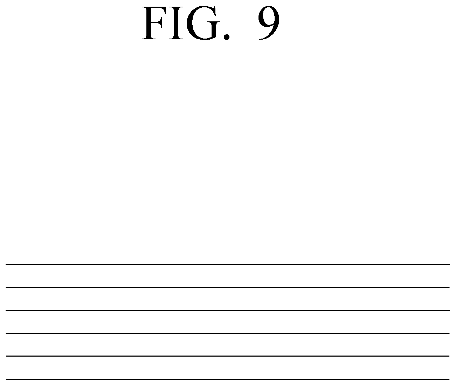

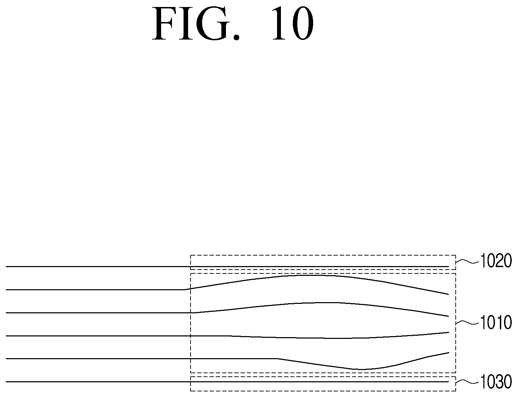

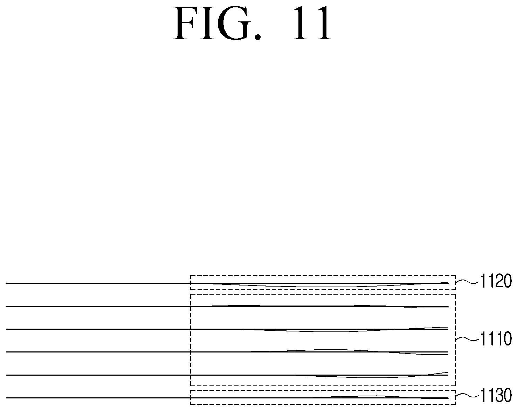

FIGS. 9 to 11 are diagrams illustrating a method of locally correcting a peripheral region of a non-uniform region. FIG. 9 is a diagram illustrating a pattern image projected in a state in which a projection surface is uniform, FIG. 10 illustrates a pattern image projected onto a non-uniform region, and FIG. 11 illustrates a pattern image corrected by applying a correction weight to the non-uniform region in FIG. 10. In addition, for convenience of description, although FIGS. 9 to 11 illustrate only horizontal lines of the reference pattern image, during actual correction, correction may be performed in the same manner also in a vertical line direction.

FIG. 10 illustrates that a non-uniform region 1010 is identified within the projection surface, and the upper and lower regions 1020 and 1030 of the identified non-uniform region are in a uniform state. In this case, when correction is performed by applying a correction weight only to the identified non-uniform region 1010, unintended image distortion may occur in a peripheral region of the non-uniform region.

Referring to FIG. 11, when correction is performed only for the non-uniform region 1010 in a state in which correction for peripheral regions 1020 and 1030 of the non-uniform region 1010 is not considered in FIG. 10, it may be understood that distortion occurs in images of an upper region 1120 and a lower region 1130 due to an influence of correction applied to a region 1110.

For example, when performing correction for the non-uniform region 1010 in FIG. 10, the processor 150 may apply a correction value in a lower direction to two upper lines distorted in an upper direction to correct the two upper lines, and may apply a correction value in an upper direction to two lower lines distorted in a lower direction. In this case, when correction for the peripheral regions 1020 and 1030 is not considered, as illustrated in FIG. 11, a peripheral region 1110 may have image distortion occurring in a lower direction due to an influence of correction applied to an upper portion of the non-uniform region 1110, and a peripheral region 1130 may have image distortion occurring in an upper direction due to an influence of correction applied to a lower portion of the non-uniform region 1110.

The processor 150 may set, for a peripheral region of the identified non-uniform region, a correction weight different from a correction weight for the non-uniform region, and may locally warp and correct an image based on the differently set correction weight. The processor 150 may set a relatively smaller correction weight for the peripheral region than the correction weight set for the non-uniform region.

For example, the processor 150 may subdivide the identified non-uniform region into unit regions having a predetermined size, and may set different correction weights for respective subdivided unit regions. In addition, the processor 150 may subdivide a peripheral region of the non-uniform region into unit regions having a predetermined size, and may set correction weights for respective unit regions of the subdivided peripheral region to be sequentially reduced based on a correction weight difference between unit regions closest to each other in the peripheral region.

The processor 150 may control the image sensor 140 to capture an image of the projection surface onto which a corrected image is projected, and may determine whether re-correction is required based on a captured image obtained from the image sensor 140.

For example, the processor 150 may correct at least one frame among actual content images based on a correction weight, and may control the projection unit 120 to project a corrected frame. After controlling the image sensor 140 to capture an image of the corrected frame projected onto the projection surface, the processor 150 may determine whether re-correction is required by comparing the captured image with an original frame.

Alternatively, the processor 150 may correct the reference pattern image by applying a correction weight thereto. After controlling the projection unit 120 to project the corrected reference pattern image, the processor 150 may control the image sensor 140 to capture the corrected reference pattern image projected onto the projection surface. The processor 150 may determine whether re-correction of the corrected image is required by comparing the captured image with the reference pattern image stored in the memory 110.

That is, the processor 150 may compare a non-uniform state for each region of a non-uniform region based on the corrected frame and the original frame or based on the corrected reference pattern image and the reference pattern image before correction, and may change a correction weight for each region based on a comparison result to re-perform correction.

The processor 150 may periodically determine whether the non-uniform region is present and whether correction is performed. Specifically, while projecting an image corrected by applying the correction weight thereto, whenever a predetermined period (e.g., 10 minutes) arrives, the processor 150 may control the image sensor 140 to capture an image and may compare the captured image with the original image to check whether the non-uniform region is present. As a result of checking, when the non-uniform region is found even in the corrected image, the correction weight may be readjusted.

Alternatively, the processor 150 may periodically project the corrected reference pattern image, compare the corrected reference pattern image with the reference pattern image stored in the memory 110, and may determine whether re-correction of the corrected image is required based on the comparison result. For example, when the projection surface is implemented as a screen, a part of the screen may bulge upward or sink downward and curvature may occur due to wind or an external force, or the like. Therefore, a screen state at a time of correction and a screen state after correction may be changed. Alternatively, the projection surface state may be changed even when an insect or another foreign substance is attached thereto and then falls off. Therefore, the processor 150 may periodically perform the above-described re-correction operation to adaptively respond to a change occurring in the projection surface state.

Meanwhile, a plurality of reference pattern images may be provided and stored in the memory 110. In this case, the processor 150 may perform correction by using a different reference pattern image for each period. For example, the memory 110 may store data related to a plurality of reference pattern images implemented in various forms such as a lattice pattern including a plurality of lattices, or a matrix pattern in which a plurality of dots, lines, symbols, characters, or the like are arranged like a matrix.

The processor 150 may apply a correction weight set for each of the plurality of reference pattern images to correct an image, and may control the projection unit 120 to consecutively project the plurality of corrected reference pattern images onto the projection surface. The processor 150 may control the image sensor 140 to capture an image of the projection surface on which the plurality of corrected reference pattern images are projected at a predetermined period, and may periodically determine whether re-correction of the corrected image is required by periodically comparing the captured image obtained from the image sensor 140 with the reference pattern image.

Accordingly, the processor 150 may periodically determine whether re-correction of the corrected image is required based on a plurality of reference pattern images implemented having various angles, sizes, and shapes, and may re-correct the correction weight based on a determination result to prevent image distortion from occurring even when images of various forms are projected onto the non-uniform region of the projection surface. The processor 150 may control the image sensor 140 to capture the entire projection surface onto which the corrected image is projected, and may identify uniformity of the entire projection surface by comparing the captured image obtained from the image sensor 140 with the reference pattern image stored in the memory 140. In this case, when performing image correction based on the correction weight for the non-uniform region, the processor 150 may identify that unintended image distortion occurs in the peripheral region of the non-uniform region or image distortion occurs at a specific position of an image.

The processor 150 may determine whether the identified uniformity is within a predetermined reference range, and may re-perform correction by changing the correction weight for each region based on the determination result. The processor 150 may repeatedly perform the above-described operations multiple times to set, as the final value, the correction weight in a state in which a degree of non-uniformity is lowest, and may continuously apply the correction weight to correct an image.

When the correction weight for the projection surface is determined, the processor 150 may match information related to the projection surface and information related to the correction weight for each region and store the matched information in the memory 110. Accordingly, when a situation in which an image is to be projected onto the same projection surface occurs again later, the processor 150 may immediately obtain the correction weight for each region stored in the memory 110 to correct the image. The information related to the projection surface may include a position of the projection surface within an entire space in which the projector 100 is positioned, a position of the projector 100, a size of the image, or the like. When the position and projection direction of the projector 100 are identified by using a LIDAR sensor or the like included in the projector 100, the processor 150 may determine whether the projection surface is a projection surface having a previous image projection history based on information stored in the memory 110. When the projection history is present, the processor 150 may obtain the correction weight for each region corresponding to the projection surface or the information related to a position of a non-uniform region, and may use the obtained information for correction.

Meanwhile, when a state in which left and right heights of an image are different is identified based on the sensing value obtained from the image sensor 140, the processor 150 may control the projection unit 120 to perform the keystone correction as described above, or may control the projection unit 120 to project an image onto a region having high uniformity.

The processor 150 may identify the projection surface state based on the sensing result obtained from at least one of the distance sensor 130, the image sensor 140, or the direction detection sensor 160, and may identify the number of planes included in the projection surface. For example, the processor 150 may generate the coordinate information based on the reference pattern image projected onto the projection surface, and may control the distance sensor 130 based on the generated coordinate information to sense the distance to the projection surface for each region of the projection surface or for each coordinate point.

The processor 150 may identify a corner axis in which distance values for respective coordinate points form symmetry based on the sensing result obtained from the distance sensor 130, and may identify the number of planes included in the projection surface based on the number of corner axes. For example, when one corner axis is present, the processor 150 may identify the number of planes included in the projection surface as two planes, and when three corner axes are present, the processor 150 may identify the number of planes included in the projection surface as three planes.

Alternatively, the processor 150 may identify the number of planes included in the projection surface based on the sensing result obtained from the image sensor 140. The processor 150 may generate the coordinate information based on the reference pattern image projected onto the projection surface, and may identify the number of planes based on corner point detection in an image obtained by capturing an image of the projection surface based on the generated coordinate information. For example, when the number of corner points is four points in the captured image, the processor 150 may identify the number of planes included in the projection surface as one plane, when the number of corner points is six points, the processor 150 may identify the number of planes included in the projection surface as two planes, and when the number of corner points is seven points, the processor 150 may identify the number of planes included in the projection surface as three planes.

When a plurality of planes included in the projection surface are identified, the processor 150 may correct the image by applying the correction weight for each region of the projection surface including a connection region in which the plurality of planes are connected to each other, and may control the projection unit 120 to project the corrected image onto the projection surface. For example, the processor 150 may set the correction weight on the basis of a region including the corner axis in which planes are connected to each other on the projection surface, and may set the correction weight for a peripheral region to be sequentially reduced. In this case, when the non-uniform region is present in at least one of the plurality of planes, the processor 150 may apply the correction weight set for the non-uniform region to correct an image.

When a plurality of planes included in the projection surface are identified, the processor 150 may control the projection unit 120 to perform the keystone correction for the image to be projected onto the projection surface based on an identified state of the projection surface. In addition, the processor 150 may to correct an image on which the keystone correction is performed by applying the correction weight for each region to the image, and may control the projection unit 120 to project the corrected image onto the projection surface.

In the above-described description, it is described that the processor 150 controls the projection unit 120 to first perform the keystone correction for an image and then applies the correction weight for each region to the image on which the keystone correction is performed to correct the image. However, an order thereof is not necessarily limited, and the order of two operations may be reversed, or two operations may be performed in parallel.

As described above, conventionally, even when a plurality of planes are included in the projection surface or the non-uniform region is present within the projection surface, only the keystone correction may be performed without considering such conditions, and accordingly, image distortion may not be resolved. According to the present disclosure, at least one of the keystone correction and correction processing for the non-uniform region may be performed for the image to be projected onto the projection surface based on an identified state of the projection surface, and accordingly, such image distortion may be resolved.

When a plurality of planes included in the projection surface are identified and the correction weight set for the connection region in which the plurality of planes are connected to each other exceeds a settable threshold, the processor 150 may control the projection unit 120 to project the image onto one plane among the plurality of planes. The threshold indicates a limit value of the correction weight at which the processor 150 is capable of correcting the non-uniform region of an image by controlling the projection unit 120.

When the correction weight set for the connection region in which a plurality of planes are connected to each other exceeds the settable threshold, the processor 150 may adjust at least one of the image projection angle, focal distance, or projection distance of the projection unit 120 to reduce a size of an image projected onto the projection surface or to change a projection angle.

When a plurality of planes included in the projection surface are identified and the correction weight for the non-uniform region is identified to be equal to or greater than the threshold in at least one of the plurality of planes, the processor 150 may control the projection unit 120 to project an image onto a region other than a region having a value equal to or greater than the threshold.

Specifically, when the non-uniform region having a value equal to or greater than the threshold is identified among a plurality of planes included in the projection surface, the processor 150 may control the projection unit 120 to project an image onto at least one remaining plane other than a plane including the region having the value equal to or greater than the threshold. The processor 150 may reduce a size of an image projected onto the projection surface, or may control the projection unit 120 to project an image onto one plane selected from among the remaining planes other than a plane identified to have the value equal to or greater than the threshold. For example, the processor 150 may control the projection unit 120 to project an image onto the largest plane among the remaining planes other than the plane identified to have the value equal to or greater than the threshold.

Alternatively, the processor 150 may adjust at least one of the image projection angle, focal length, or projection distance of the projection unit 120 to project an image onto at least one plane other than the plane identified to have the value equal to or greater than the threshold.

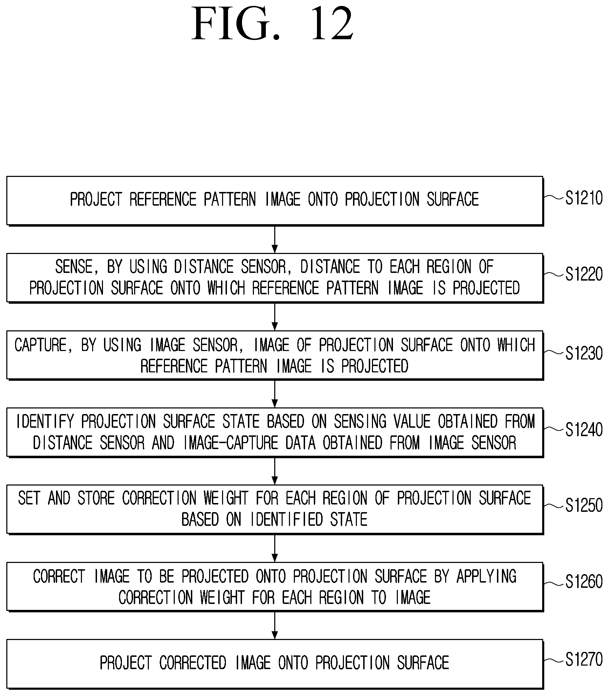

FIGS. 12 to 20 are flowcharts illustrating a control method for a projector according to various embodiments.

Referring to FIG. 12, the projector may project the reference pattern image onto the projection surface (S1210). The projector may store the data related to the reference pattern image in the memory. The projector may sense the distance to the projection surface and the size of the projection surface by using the distance sensor, and may adjust the size of the reference pattern image projected onto the projection surface based on the sensing result.

The projector may sense, by using the distance sensor, the distance to each region of the projection surface onto which the reference pattern image is projected (S1220). In this case, the projector may generate the coordinate information based on the reference pattern image projected onto the projection surface, and may control the distance sensor based on the generated coordinate information to sense the distance to the projection surface for each region of the projection surface or for each coordinate point. Alternatively, when the distance sensor has a function of generating and providing the coordinate information by itself, the projector may sense the distance to the projection surface for each region of the projection surface or for each coordinate point based on the coordinate information provided by the distance sensor.

The projector may capture, by using the image sensor, an image of the projection surface onto which the reference pattern image is projected (S1230). For example, the projector may set a wide-angle capture mode capable of capturing a wide region through angle adjustment of a camera lens, and may capture the entire projection surface onto which the reference pattern image is projected at one time. Alternatively, the projector may divide the entire projection surface into screen regions each having a predetermined size and may capture images for each divided screen region.

The projector may identify the projection surface state based on the sensing value obtained from the distance sensor and the image-capture data obtained from the image sensor (S1240). The projector may identify the respective non-uniform regions based on the sensing values obtained from the distance sensor and the image-capture data obtained from the image sensor, and may identify the non-uniform region to be corrected by comparing the respectively identified results with each other.

The projector may set and store the correction weight for each region of the projection surface based on the identified state of the projection surface (S1250). For example, the projector may measure the degree to which the reference pattern image is deformed in the non-uniform region based on the image-capture data obtained from the image sensor, and may set the correction weight for each region based on the degree of deformation of the non-uniform region. Alternatively, the projector may set the correction weight for each region based on the distance difference for the non-uniform region based on the distance to the projection surface for the uniform region on the projection surface based on the sensing values obtained from the distance sensor. The projector may aggregate the correction weight extracted based on the sensing values obtained from the distance sensor and the correction weight extracted based on the image-capture data obtained from the image sensor, and may set the correction weight for each region of the projection surface by using the aggregated correction weight.

The projector may correct the image to be projected onto the projection surface by applying the correction weight for each region to the image (S1260), and project the corrected image onto the projection surface (S1270). Specifically, the projector may correct the image by applying the correction weight for each region of the projection surface set based on the reference pattern image to the projected the image to be projected onto the projection surface, and project the corrected image onto the projection surface.

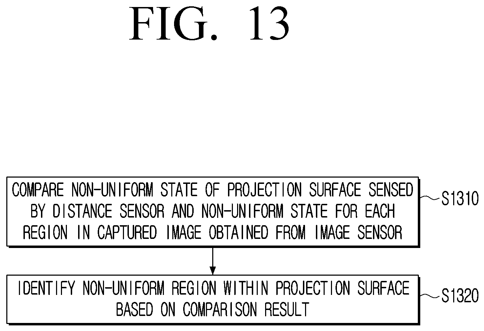

Referring to FIG. 13, the projector may identify the projection surface state by comparing the non-uniform state of the projection surface sensed by the distance sensor and the non-uniform state for each region in the captured image obtained from the image sensor (S1310). For example, the projector may identify the first non-uniform region of the projection surface based on the sensing values of the distance sensor, and may identify the second non-uniform region based on the image-capture data obtained from the image sensor. The projector may identify the projection surface state by comparing the first non-uniform region with the second non-uniform region.

The projector may identify the non-uniform region within the projection surface based on the comparison result (S1320). For example, based on the comparison result of the first non-uniform region and the second non-uniform region, the projector may determine the common region between the first non-uniform region and the second non-uniform region or each of the two regions as the non-uniform region to be corrected of the projection surface.

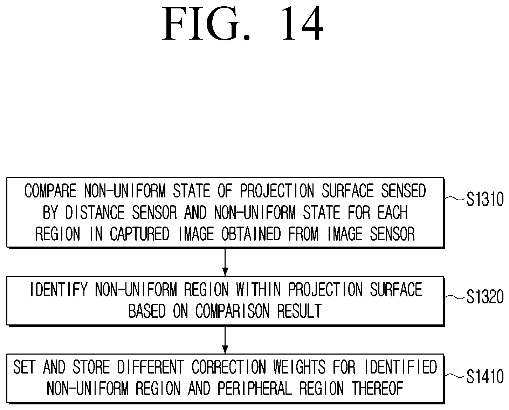

Referring to FIG. 14, the projector may set and store the different correction weights for the identified non-uniform region and the peripheral region thereof (S1410). For example, the projector may set a relatively smaller correction weight for the peripheral region of the non-uniform region than the correction weight set for the identified non-uniform region.

In this way, when performing correction of an image for the non-uniform region, the projector may prevent unintended image distortion from occurring in the peripheral region.

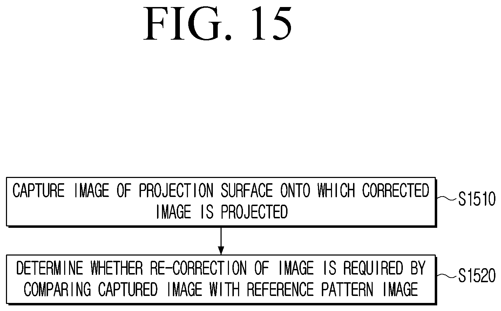

Referring to FIG. 15, the projector may capture an image of the projection surface onto which the corrected image is projected (S1510). For example, the projector may project the reference pattern image to which the correction weight for each region of the projection surface is applied onto the projection surface, and may capture the reference pattern image projected onto the projection surface by using the image sensor.

The projector may determine whether re-correction of the image is required by comparing the captured image with the reference pattern image (S1520). The projector may compare the captured image corresponding to the corrected reference pattern image with the reference pattern image stored in the memory, and may perform re-correction of the non-uniform region based on the comparison result.

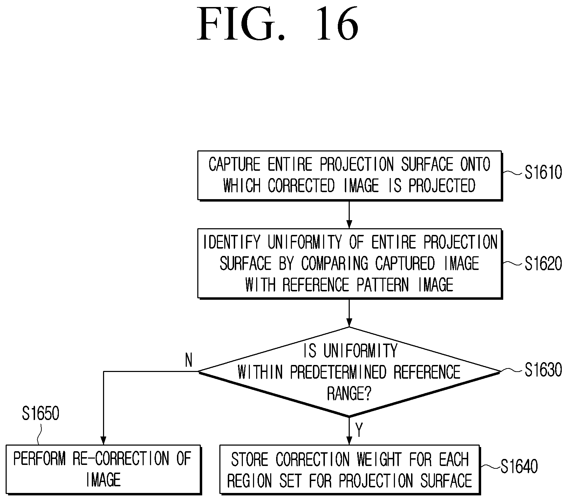

Referring to FIG. 16, the projector may capture the entire projection surface onto which the corrected image is projected (S1610). In this case, the projector may capture, by using the image sensor, not only the non-uniform region but also the entire projection surface including the peripheral region of the non-uniform region for the projection surface onto which the corrected reference pattern image is projected.

The projector may identify uniformity of the entire projection surface by comparing the captured image with the reference pattern image (S1620). The projector may identify uniformity of the entire projection surface by comparing the captured image of the entire projection surface with the reference pattern image stored in the memory. The projector may determine whether the identified uniformity is within the predetermined reference range (S1630).

When the identified uniformity of the entire projection surface is within the predetermined reference range, the projector may determine and store the correction weight for each region set for the projection surface (51640). However, when the identified uniformity of the entire projection surface is equal to or greater than the predetermined reference range, the projector may change the correction weight and perform re-correction of the image (S1650).

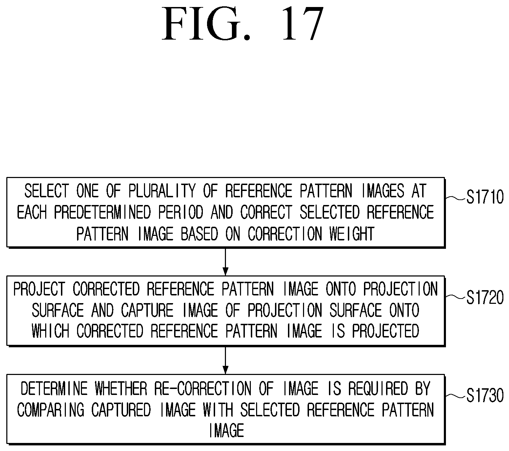

Referring to FIG. 17, the projector may select one of the plurality of reference pattern images at each predetermined period and may correct the selected reference pattern image based on the correction weight (S1710). In this case, the projector may store the data related to the plurality of reference pattern images in the memory. The plurality of reference pattern images may include various reference pattern images having various forms to inspect the non-uniform region of the projection surface based on various angles, shapes, sizes, or the like.

The projector may project the corrected reference pattern image onto the projection surface and may capture an image of the projection surface onto which the corrected reference pattern image is projected (S1720). For example, the projector may project the plurality of reference pattern images to which the correction weight for each region of the projection surface is applied onto the projection surface at the predetermined period, and may capture the reference pattern images projected onto the projection surface by using the image sensor.

The projector may determine whether re-correction of the image is required by comparing the captured image with the selected reference pattern image (S1730). The projector may periodically compare the captured image corresponding to the corrected reference pattern image with the reference pattern image stored in the memory and may perform re-correction of the non-uniform region based on the comparison result. For example, the projector may set, as the final correction weight, the maximum value among the correction weights obtained through comparison between the plurality of corrected reference pattern images and the reference pattern images stored in the memory or an average value of the obtained correction weights, and may apply the set final correction weight to the image to be projected onto the projection surface.

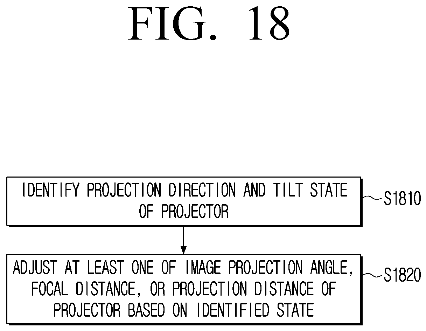

Referring to FIG. 18, the projector may identify, by using the direction detection sensor, the projection direction and the tilt state of the projector (S1810). In this case, the direction detection sensor is a component for sensing the projection direction of an image projected from the projector, and may include at least one of the gyro sensor, the geomagnetic sensor, the tilt sensor, or the compass.

The projector may adjust at least one of the image projection angle, focal distance, or projection distance of the projector based on the identified projection direction and tilt state (S1820). The projector may perform such operations based on the sensing values obtained from the direction detection sensor. However, when performed in conjunction with the sensing values obtained from the distance sensor, the image projection angle, focal distance, and projection distance for the projection surface may be adjusted more accurately.

In addition, before performing correction for each region of the projection surface, the projector may increase uniformity of the corrected image through projector image adjustment based on the projection direction and the tilt state of the projector.

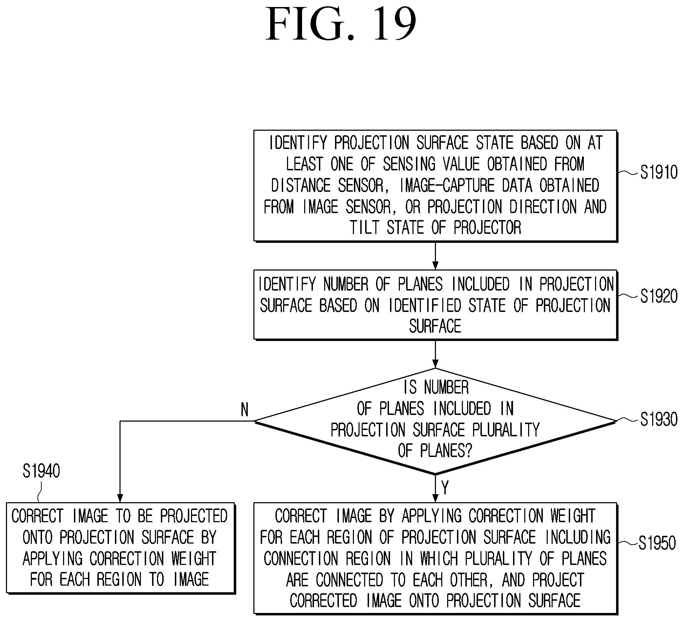

Referring to FIG. 19, based on at least one of the sensing value obtained from the distance sensor, the image-capture data obtained from the image sensor, or the projection direction and tilt state of the projector, he projector may identify the projection surface state (S1910).

The projector may identify the number of planes included in the projection surface based on the identified state of the projection surface (S1920). For example, the projector may identify, as the corner axis, the reference line at which an increasing/decreasing direction of the distance values changes based on the sensing values obtained from the distance sensor, and may identify the number of planes included in the projection surface based on the number of corner axes. When one corner axis is present, the projector may identify the number of planes included in the projection surface as two planes, and when three corner axes are present, the projector may identify the number of planes included in the projection surface as three planes.

The projector may determine whether the number of planes included in the projection surface is a plurality of planes (S1930), and when the number of planes included in the projection surface is identified as one plane rather than a plurality of planes, the projector may correct the image to be projected onto the projection surface by applying the correction weight for each region to the image (S1940).

When the number of planes included in the projection surface is identified as a plurality of planes, the projector may correct the image by applying the correction weight for each region of the projection surface including the connection region in which the plurality of planes are connected to each other based on the identified state of the projection surface, and may project the corrected image onto the projection surface (S1950). For example, the projector may apply the correction weight to correct the connection region including the corner axis in which wall surfaces are connected to each other, and may correct an image by setting the correction weight for the peripheral region of the connection region differently from the connection region. In this case, based on the identified state of the projection surface, when the non-uniform region is present within at least one of planes included in the projection surface, the projector may correct the image by applying the correction weight for the non-uniform region.

The projector may perform the keystone correction for the image to be projected onto the projection surface to adjust the left and right heights of the image projected onto a plurality of planes. The projector may correct an image on which the keystone correction is performed by applying the correction weight for each region to the image, and may project the corrected image onto the projection surface.

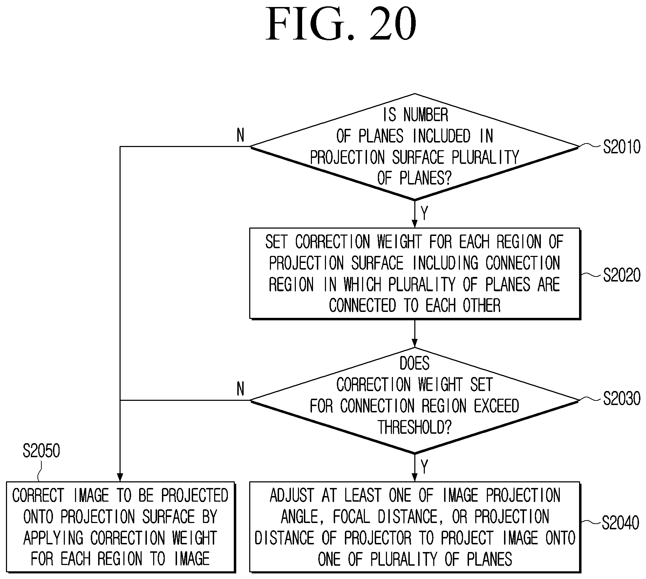

Referring to FIG. 20, the projector may identify whether the number of planes included in the projection surface is a plurality of planes (S2010), and when the number of planes included in the projection surface is identified as a plurality of planes, the projector may set the correction weight for each region of the projection surface including the connection region in which the plurality of planes are connected to each other based on the identified state of the projection surface (S2020).

The projector may set and store, in the memory, the correction weight for each region for the connection region in which the plurality of planes are connected to each other and plane regions around the connection region based on the identified state of the projection surface.

When the number of planes included in the projection surface is identified as one plane, the projector may correct the image to be projected onto the projection surface by applying the correction weight for each region to the image (S2050).

The projector may identify whether the correction weight set for the connection region in which the plurality of planes are connected to each other exceeds the settable threshold (S2030). When the correction weight set for the connection region exceeds the threshold based on the identification result, the projector may adjust at least one of the image projection angle, focal distance, or projection distance of the projector to project an image onto one of the plurality of planes (S2040).

When the correction weight set for the connection region is equal to or less than the threshold based on the identification result, the projector may apply the correction weight for each region to the image to be projected onto the projection surface to perform correction (S2050).

The projector may also identify whether the region is present in which the correction weight set for at least one of the plurality of planes is equal to or greater than the threshold. When the region in which the correction weight is equal to or greater than the threshold is identified in at least one plane, the projector may adjust at least one of the image projection angle, focal distance, or projection distance of the projector to project an image onto at least one plane excluding the plane identified as being equal to or greater than the threshold. For example, the projector may reduce a size of an image projected onto the projection surface to project the image onto remaining planes excluding the plane identified as being equal to or greater than the threshold. Alternatively, the projector may select one of the remaining planes excluding the plane identified as being equal to or greater than the threshold and may adjust the image projection angle to project the image onto the selected plane.

When no region equal to or greater than the threshold is identified on the projection surface, the projector may apply the correction weight for each region to the image to be projected onto the projection surface to perform correction (S2050).

Meanwhile, according to an embodiment of the present disclosure, the various embodiments described above may be implemented by software including an instruction stored on a machine-readable storage medium, the instructions being readable by a machine (e.g., a computer). The machine may be a device that invokes the stored instruction from a storage medium, may be operated based on the invoked instruction, and may include the projector according to the disclosed embodiments. When the instruction is executed by the processor, the processor may directly perform, or perform functions corresponding to the instructions by using other components under control of the processor. The instruction may include codes generated or executed by a compiler or an interpreter. The machine-readable storage medium may be included in the form of a non-transitory storage medium. Here, the term "non-transitory" merely indicates that the storage medium is tangible without including a signal, and does not distinguish whether data are semi-permanently or temporarily stored in the storage medium.

In addition, according to an embodiment of the present disclosure, the methods according to the various embodiments described above may be provided as a computer program product. The computer program product may be traded as a product between a seller and a buyer. The computer program product may be distributed in the form of a machine-readable storage medium (e.g., a compact disc read only memory (CD-ROM)) or online through an application store (e.g., Play Store^{™}). In the case of online distribution, at least a part of the computer program product may be temporarily stored or generated in a storage medium such as a memory of a manufacturer server, an application store server, or a relay server.

In addition, each of the components (e.g., modules or programs) according to the various embodiments described above may include a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before integration in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the preferred embodiments of the present disclosure are illustrated and described as above, the present disclosure is not limited to the above-described specific embodiments, and may be variously modified by those skilled in the art to which the present disclosure pertains without departing from the scope of the present disclosure as claimed in the accompanying claims. These modifications should also be understood to fall within the spirit of the present disclosure.

## Claims

1. A projector comprising:
a memory;
a projection unit;
a distance sensor configured to sense a distance to a projection surface;
an image sensor configured to capture an image of the projection surface; and
a processor,
wherein the processor is configured to
identify a projection surface state based on sensing results obtained from the distance sensor and the image sensor,
set a correction weight for each region based on the identified state and store the correction weight in the memory,
correct an image to be projected onto the projection surface by applying the correction weight for each region to the image, and
control the projection unit to project the corrected image onto the projection surface.

2. The projector as claimed in claim 1, wherein the memory stores data related to a reference pattern image,
and the processor is configured to:
control the projection unit to project the reference pattern image onto the projection surface;
control the image sensor to capture an image of the projection surface on which the reference pattern image is projected; and
identify a non-uniform region within the projection surface based on the captured image obtained from the image sensor and a sensing value obtained from the distance sensor, set different correction weights for the non-uniform region and a peripheral region thereof, and store the correction weights in the memory.

3. The projector as claimed in claim 2, wherein the processor is configured to:
correct the reference pattern image based on the set correction weight, and control the projection unit to project the corrected reference pattern image onto the projection surface; and
control the image sensor to capture an image of the projection surface on which the corrected reference pattern image is projected, and determine whether re-correction of the image is required by comparing the captured image obtained from the image sensor with the reference pattern image.

4. The projector as claimed in claim 3, wherein the processor is configured to:
control the image sensor to capture an image of an entire projection surface on which the corrected image is projected; and
identify uniformity of the entire projection surface by comparing the captured image obtained from the image sensor with the reference pattern image, and determine whether the identified uniformity is within a predetermined reference range.

5. The projector as claimed in claim 2, wherein the memory stores data related to a plurality of reference pattern images,
and wherein the processor is configured to:
select one of the plurality of reference pattern images at each predetermined period, correct the selected reference pattern image based on the correction weight, and control the projection unit to project the corrected reference pattern image onto the projection surface;
control the image sensor to capture an image of the projection surface on which the corrected reference pattern image is projected; and
determine whether re-correction of the image is required by comparing the captured image obtained from the image sensor with the selected reference pattern image.

6. The projector as claimed in claim 1, further comprising:
a direction detection sensor configured to sense a projection direction of the projection unit,
wherein the processor is configured to:
identify the projection direction and tilt state of the projector based on a sensing result obtained from the direction detection sensor, and
adjust at least one of the image projection angle, focal distance, or projection distance of the projection unit based on the identified state.

7. The projector as claimed in claim 6, wherein the processor is configured to:
based on the sensing result obtained from at least one of the distance sensor, the image sensor, and the direction detection sensor, when a plurality of planes included in the projection surface are identified,
correct the image by applying a correction weight for each region including a connection region in which the plurality of planes are connected to each other, and
control the projection unit to project the corrected image onto the projection surface.

8. The projector as claimed in claim 7, wherein the processor is configured to:
when the correction weight set for the connection region exceeds a settable threshold, control the projection unit to project the image onto one plane among the plurality of planes.

9. A control method for a projector, the method comprising:
projecting a reference pattern image onto a projection surface;
sensing, by using a distance sensor, a distance to each region of the projection surface on which the reference pattern image is projected;
capturing, by using an image sensor, an image of the projection surface on which the reference pattern image is projected;
identifying a projection surface state based on a sensing value obtained from the distance sensor and image-capture data obtained from the image sensor;
setting and storing a correction weight for each region of the projection surface based on the identified state;
correcting an image to be projected onto the projection surface by applying the correction weight for each region to the image; and
projecting the corrected image onto the projection surface.

10. The method as claimed in claim 9, wherein the identifying of the projection surface state includes:
comparing a non-uniform state of the projection surface sensed by the distance sensor with a non-uniform state for each region in a captured image obtained from the image sensor; and
identifying a non-uniform region within the projection surface based on a comparison result.

11. The method as claimed in claim 10, wherein the setting and storing of the correction weight for each region includes:
setting and storing different correction weights for the identified non-uniform region and a peripheral region thereof.

12. The method as claimed in claim 9, further comprising:
capturing an image of an entire projection surface on which the corrected image is projected;
identifying uniformity of the entire projection surface by comparing the captured image with the reference pattern image; and
determining whether the identified uniformity is within a predetermined reference range.

13. The method as claimed in claim 9, further comprising:
selecting one of a plurality of reference pattern images at each predetermined period, and correcting the selected reference pattern image based on the correction weight;
projecting the corrected reference pattern image onto the projection surface and capturing an image of the projection surface on which the corrected reference pattern image is projected; and
determining whether re-correction of the image is required by comparing the captured image with the selected reference pattern image.

14. The method as claimed in claim 10, further comprising:
identifying the projection direction and tilt state of the projector; and
adjusting at least one of the image projection angle, focal distance, or projection distance of the projector based on the identified state.

15. The method as claimed in claim 14, further comprising:
based on at least one of the sensing value obtained from the distance sensor, the image-capture data obtained from the image sensor, and the projection direction and tilt state of the projector, identifying the projection surface state;
identifying the number of planes included in the projection surface based on the identified state; and
when the number of planes included in the projection surface is identified as a plurality of planes, correcting the image by applying the correction weight for each region of the projection surface including a connection region in which the plurality of planes are connected to each other, and projecting the corrected image onto the projection surface.
